Europäisches Patentamt

European Patent Office

Office européen des brevets

(19)

(11) EP 0 871 337 A2

(12) EUROPEAN PATENT APPLICATION

(43) Date of publication:
14.10.1998 Bulletin 1998/42

(51) Int Cl.⁶: H04N 7/52, H04N 7/32

(21) Application number: 98302423.3

(22) Date of filing: 30.03.1998

(84) Designated Contracting States:
AT BE CH DE DK ES FI FR GB GR IE IT LI LU MC
NL PT SE
Designated Extension States:
AL LT LV MK RO SI

(30) Priority: 07.04.1997 GB 9707037

(71) Applicant: NDS LIMITED
West Drayton, Middlesex UB7 0DQ (GB)

(72) Inventors:
• Bock, Alois Martin
  Eastleigh, Hampshire SO50 4PF (GB)
• Jordon, John Paul
  Bournemouth, Dorset BH8 8NU (GB)

(74) Representative: Anderson, Angela Mary
NDS Limited,
Stoneham Rectory
Stoneham Lane
Eastleigh, Hampshire SO50 9NW (GB)

(54) Method and apparatus for modifying a digital data stream

(57) This invention relates to improvements in controlling the decoder buffer occupancy, particularly in relation to, but not exclusively to, switching between compressed bitstreams.

This invention provides a method of modifying a digital bitstream 11 to be transmitted through a decoder 14 having a buffer 15. An expected level of buffer occupancy is determined for a point in the digital bitstream 11 and the digital bitstream 11 is modified at that point to change the buffer occupancy to a second level. The second level may be determined from a second digital bitstream 12. One advantage of this method is that the occupancy of the buffer 15 can be adjusted to match the buffer requirements of the second bitstream 12 before switching to the second bitstream 12.

The invention provides method and apparatus for improving the decoder buffer management during switching between bitstreams.

Fig.2.

## Description

This invention relates to improvements in controlling the decoder buffer occupancy, particularly in relation to, but not exclusively to, switching between compressed bitstreams.

In the transmission of digital data, including broadcasting, it is desirable to compress the data prior to transmission in order to reduce the required bandwidth. Standardising the characteristics of the compressed signal means that the transmitted signal can be received and decompressed by all users in a known manner. One such standard is ISO/IEC 13818, also known as MPEG-2.

An MPEG-2 transmission system allows several video, audio and associated services to be multiplexed and sent over a single digital transmission channel. The information to be transmitted is compressed into a single continuous transport stream, with the different programs, data, etc. distributed throughout the stream. A video signal is compressed by removing any spatial or temporal redundancy in the signal, i.e. eliminating any predictability in the source signal. The moving pictures expert group (MPEG) specifies three types of frames in a digital video signal: I-frames, P-frames and B-frames. P-frames are predicted from previous frames, B-frames are predicted from previous and subsequent frames, while I-frames are non-predictive and as such contain temporal redundancy. Although I-frames require a larger number of bits than both P and B-frames, they are necessary for re-synchronisation and editing purposes. This means that the decoded signal is, to a large extent, dependent on the coding history of the signal.

As the number of applications for video compression grows, switching or splicing bitstreams becomes more and more important. In the studio environment it is necessary to switch between previously compressed bitstreams to near frame accuracy. In television distribution links, the ability to insert local programme material, such as advertisements, is also required. Many more examples of bitstream splicing could be given in conjunction with video file servers.

A switch from one compressed bitstream at an arbitrary point will generally result in a total break-up of the displayed picture, recovering only after synchronisation is regained in the decoding algorithm. Furthermore, even if the switch between the compressed bitstreams is carefully timed to coincide with the start of a new sequence (i.e. an I-frame), the occupancy of the decoder buffer after the switch is generally not defined resulting in possible underflow or overflow some time after the switch.

Accordingly, one object of the present invention is to provide a method and apparatus which will allow seamless or near seamless switching between compressed bitstreams.

According to one aspect of the present invention, there is provided a method of modifying a first digital bitstream to be transmitted through a decoder having a buffer, the method comprising: deriving a measure of expected buffer occupancy at a point in the first digital bitstream; and modifying the first digital bitstream at said point such that the buffer occupancy is changed to a second level.

According to a second aspect of the present invention, there is provided apparatus for modifying a first digital bitstream operatively connected to a decoder having a buffer through which the first digital bitstream is to be transmitted, the apparatus comprising: a controller for deriving a measure of an expected level of buffer occupancy at a point in the first digital bitstream and for modifying the first digital bitstream at said point such that the buffer occupancy is changed to a second level.

Reference will now be made, by way of example, to the accompanying drawings, in which:

Figure 1 is a schematic diagram of the system according to one aspect of the present invention.

Figure 2 is a diagram showing one embodiment of the proposed apparatus to switch between compressed bitstreams.

Figure 3 is a diagram showing one example of the digital bitstreams during the switching process.

A method is described below which avoids the problems of the prior art by making sure that the buffer characteristics prior to the switch are matched to the buffer requirements immediately after the switch.

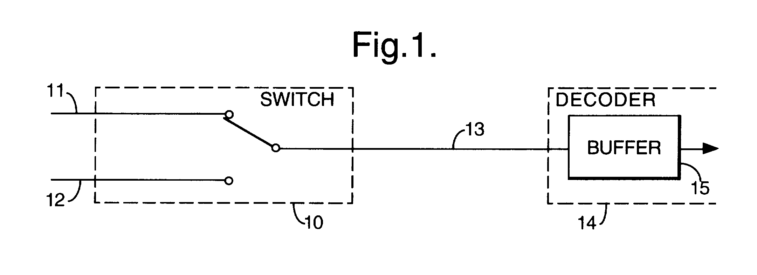

The switching system is illustrated in Figure 1 and includes a switching circuit 10 for switching between a first input bitstream 11 and a second input bitstream 12. The switching process can be initialised either by an external request or by a request embedded in the bitstream. The resulting output stream is transmitted through a buffer 15 in a decoder 14. The bitstreams considered in this invention are fixed bit-rate MPEG-2 video streams, although the same principle could be used for any bitstream that is passed through a buffer. Although connected directly to the decoder 14 in this embodiment, it is equally valid to store the output bitstream 13 prior to passing through a buffer 15, or even retransmit the output bitstream 13.

For a bitstream to be fully MPEG-2 compliant, after switching, it should satisfy three independent requirements:

1. The syntax of the bitstream must be compliant with the MPEG-2 specification.

2. The switching process must not introduce visible artefacts into the video bitstream.

3. It must be possible to decode the bitstream using a buffer not exceeding that specified in the MPEG-2 specification.

The first requirement is fundamental to the correct decoding of the bitstream. The second requirement is important in conjunction with editing bitstreams that contain B-frames. B-frames are predicted from both the previous I or P-frame and the following I or P-frame. Such bi-directionally predicted frames represent a particular problem during switching as a cut to a new sequence will normally break one of the prediction dependencies. A cut across one of these prediction dependencies will cause the incorrect frame to be used as a reference for the reconstruction process. The third requirement necessitates that the state of the decoder buffer is known at all edit points in the bitstreams.

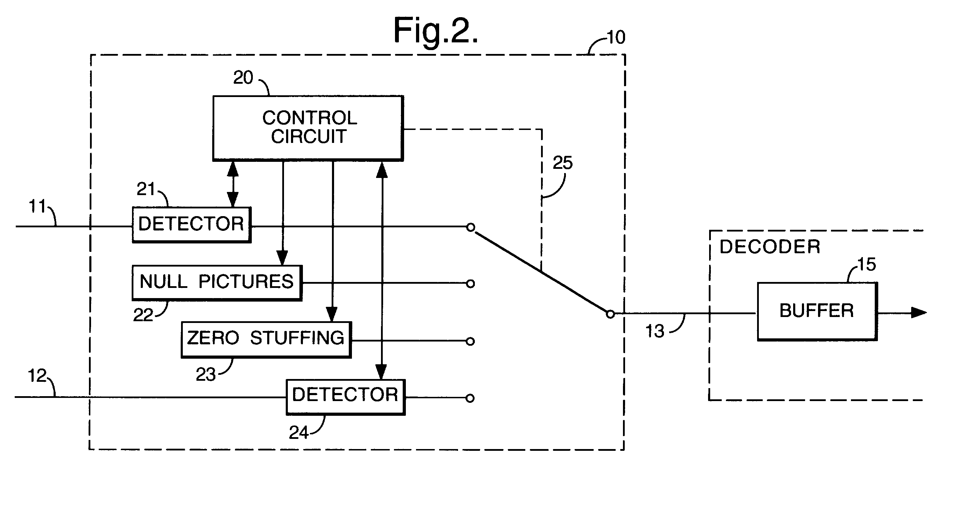

Figure 2 shows a block diagram of an example implementation of the proposed system to solve the problems associated with decoder buffer management. Before switching from the first bitstream 11, to the second bitstream 12, account must be taken of the differing buffer requirements of the two streams. A decoder buffer 15 connected to the output stream 13, and therefore equal to the requirements of the first stream 11, will need to be adjusted to be equal to the buffer requirements of the second bitstream 12. It is therefore necessary to derive a measure of the expected buffer occupancy of the first stream 11 at the exit point in the first stream 11 using a detector 21, and to derive a measure of the buffer requirements of the second bitstream 12 at the entrance point into the second bitstream 12. The control circuit 20 determines the edit points in the first and second bitstreams.

The detectors 21 and 24 derive a measure of the expected buffer occupancy and buffer requirements using parameters contained in the bitstreams. In a preferred embodiment, parameters such as bit-rate, buffer size and buffer delay can be used determine the buffer occupancy. This works well for bit-rates above 2.5 Mbit/s (assuming a maximum buffer size of 1.8 Mbit, as specified in MPEG-2 Main Profile @ Main Level).

The problem of calculating the buffer occupancy can be overcome using a novel approach that initially derives an approximate buffer occupancy from the quantisation parameter, Qp, in the bitstream. Qp is an indication of the level of quantisation applied at the encoder and is set according to the encoder buffer occupancy. In a fixed rate system the decoder and encoder buffers form a complementary pair which allows a measure of the decoder buffer occupancy to be derived from the encoder buffer occupancy. The maximum allowable value of Qp is 31 and as such an approximate decoder buffer occupancy can be determined by:

$$buffer\ occupancy \approx buffer\ size - \left( \frac{Qp \times buffer\ size}{31} \right)$$

The exact occupancy cannot be derived from Qp because of the lack of resolution provided by it (31 steps). However, an accurate value of buffer occupancy can be determined from the approximate value using the previously mentioned parameters in the bitstream such as bit-rate, buffer size and buffer delay.

In a second embodiment for deriving a measure of the buffer fill state, buffer occupancy could be regularly inserted into the user data area by the encoder for extraction and use by the control circuit 20. In a third embodiment, a decoder buffer model could be maintained for each bitstream to be switched. It will be further appreciated that there are many other ways in which the buffer occupancy could be estimated and these are intended to be included herein.

Having derived a measure of expected buffer occupancy of the first stream 11 and the buffer requirements for the second stream 12, the control circuit 20 adjusts the occupancy of the buffer 15 to the buffer requirements of the second bitstream. The objective is to ensure that, at the time of switching, the occupancy of the buffer 15 equates to the buffer requirements of the second stream 12.

In the present invention two mechanisms exist to achieve this. When the buffer requirement of the second bitstream is greater than the expected buffer occupancy of the first bitstream, "null pictures" 22 are inserted to increase the buffer level up to that of the required level. When the buffer requirement of the second bitstream is less than the expected buffer occupancy of the first bitstream, zero stuffing 23 is used to bring the occupancy down to the required level.

The use of null pictures 22, results in pictures of minimal information being produced and causes the decoder buffer 15 to fill at approximately the current bit-rate. The number of null pictures is derived by the increase in occupancy ($\Delta i$), the bit-rate and the frame-rate, as follows:

$$Number\ of\ Null\ pictures = \frac{\Delta i \times frame\text{-}rate}{bit\text{-}rate}$$

where $\Delta i$ is in bits, frame-rate is in frames per second and bit-rate is in bits per second.

If necessary a combination of null pictures 22 and zero stuffing 23 can be used to bring the buffer occupancy to the desired level before the switch takes place. The amount of zero stuffing 23 added to each frame is derived by the decrease in buffer occupancy that is required.

The control circuit 20 controls the number of null pictures and the zero stuffing by effecting the switching operation 25. In addition to equating the buffer occupancy of the first bitstream 11 to the buffer requirements of the second stream 12, the control circuit 20 also detects any frames in the second bitstream 12 that occur after the switch but are predicted from frames prior to the switch. The control circuit 20 then replaces each of these frames by a null picture to avoid any block distortion. In MPEG-2 the B frames that would be displayed immediately prior to switch, and therefore are transmitted after the first I frame immediately following the switch, are replaced by null pictures.

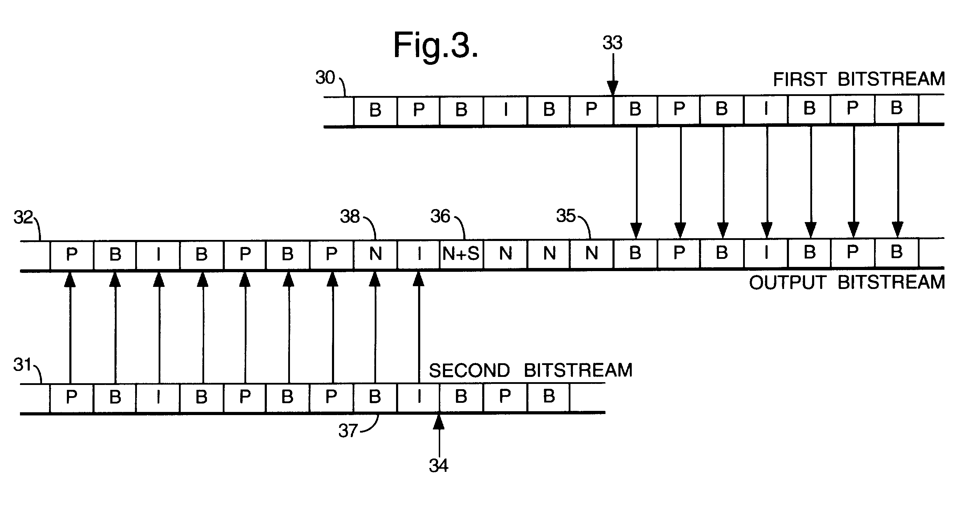

Figure 3 shows an example of the bitstreams during the switching process. A switch is to be made from the first bitstream 30 at position 33 to the second bitstream 31 at position 34. Having calculated the expected buffer requirements of the first bitstream at position 33, and the buffer requirements of the second bitstream at position 34, it was determined, for example, that 4 null pictures were required to increase the buffer occupancy. However as previously stated, zero stuffing is also often required to obtain the exact buffer occupancy. Therefore 3 null pictures 35 and a null picture with zero stuffing 36 are inserted into the output bitstream 32. The B-frame 37 immediately after the first I frame in the second bitstream 31 is also replaced by a null picture 38 in the output bitstream 32 to avoid introducing distortion.

This invention is of use where the decoder buffer requires adjustment, for example when switching between MPEG-2 bitstreams. In addition it would be possible to apply the invention to switching between any two bitstreams that are to be transmitted through a buffer.

The invention provides a controlled manner for switching between digital bitstreams without causing buffer problems or introducing artefacts into the resulting bitstream.

## Claims

1. A method of modifying a first digital bitstream to be transmitted through a decoder having a buffer, the method comprising:

   deriving a measure of expected buffer occupancy at a point in the first digital bitstream; and
   modifying the first digital bitstream at said point such that the buffer occupancy is changed to a second level.

2. The method of claim 1, further comprising deriving a measure of the second level of buffer occupancy from a point in a second digital bitstream.

3. The method of claim 2, further comprising switching from said point in the first digital bitstream to said point in the second digital bitstream.

4. The method of claims 1 to 3, wherein the buffer occupancy is increased by inserting null information at said point in the first digital bitstream.

5. The method of claims 1 to 4, wherein the buffer occupancy is decreased by inserting stuffing information at said point in the first digital bitstream.

6. The method of claims 2 to 5, further comprising replacing information in the second digital bitstream that occurs after said point and is predicted from information preceding said point with null information.

7. The method of claims 2 or 6, wherein a measure of the expected level of buffer occupancy is derived from information contained in the first digital bitstream and a measure of the second level of buffer occupancy is derived from information contained in the second digital bitstream.

8. The method of claims 2 to 6, further comprising deriving a measure of the expected and second levels of buffer occupancy from decoder buffer models maintained for each bitstream.

9. The method of claims 2 to 8, further comprising providing the first and second digital bitstreams as first and second digital video bitstreams.

10. Apparatus for modifying a first digital bitstream operatively connected to a decoder having a buffer through which the first digital bitstream is to be transmitted, the apparatus comprising:
    a controller for deriving a measure of an expected level of buffer occupancy at a point in the first digital bitstream and for modifying the first digital bitstream at said point such that the buffer occupancy is changed to a second level.

11. The apparatus of claim 10, further comprising a detector for deriving a measure of the second level of buffer occupancy from a point in a second digital bitstream.

12. The apparatus of claim 11, further comprising a switch for switching from said point in the first digital bitstream to said point in the second digital bitstream.

13. The apparatus of claims 10 to 12, further comprising a null inserter for increasing the buffer occupancy by inserting null information at said point in the first digital bitstream.

14. The apparatus of claims 10 to 13, further comprising a stuffing inserter for decreasing the buffer occupancy by inserting stuffing information at said point in the first digital bitstream.

15. The apparatus of claims 11 to 14, further comprising a replacing element for replacing information in the second digital bitstream that occurs after said point and is predicted from information preceding said point with null information.

16. The apparatus of claims 11 to 15, wherein the detector derives the expected level of buffer occupancy from information contained in the first digital bitstream and derives the second level of buffer occupancy from information contained in the second digital bitstream.

17. The apparatus of claims 11 to 15, wherein the detector determines a measure for the expected and second levels of buffer occupancy from decoder buffer models maintained for each bitstream.

18. The apparatus of claims 11 to 17, adapted to modify the first and second digital bitstreams presented in the form of digital video bitstreams.

Fig.1.

DECODER

BUFFER

15

14

13

SWITCH

10

11

12

# Fig.2.

EP 0 871 337 A2

# Fig.3.

FIRST BITSTREAM

| B | P | B | I | B | P | B | P | B | I | B | P | B |

OUTPUT BITSTREAM

| P | B | I | B | P | B | P | N | I | N+S | N | N | N | B | P | B | I | B | P | B |

SECOND BITSTREAM

| P | B | I | B | P | B | P | B | I | B | P | B |

EP 0 871 337 A2